# EUROPÄISCHE PATENTSCHRIFT

(11) **EP 4 313 837 B1**
(45) Veröffentlichungstag und Bekanntmachung des Hinweises auf die Patenterteilung: **13.11.2024**
(21) Anmeldenummer: 22723447.3
(22) Anmeldetag: 20.04.2022
(51) Int. Cl.: B66C 13/06, B65G 17/48

(54) **VORRICHTUNG ZUM HEBEN UND STABILISIEREN VON LASTEN**
DEVICE FOR LIFTING AND STABILISING LOADS
DISPOSITIF DE LEVAGE ET DE STABILISATION DE CHARGES

(30) Priorität: 21.05.2021 EP 21175255
(43) Veröffentlichungstag der Anmeldung: 07.02.2024
(73) Patentinhaber: Siemens Aktiengesellschaft, 80333 München (DE)
(72) Erfinder: SCHWANK, Andreas, 65451 Kelsterbach (DE); SOTER, Eric, 63456 Hanau (DE)
(74) Vertreter: Siemens Patent Attorneys
(86) Internationale Anmeldenummer: PCT/EP2022/060397
(87) Internationale Veröffentlichungsnummer: WO 2022/242974

(56) Entgegenhaltungen:
- DE-A1- 102004 045 516
- DE-A1- 102018 100 776
- DE-A1- 3 636 459
- DE-A1- 4 219 370
- DE-B4- 102005 038 820

## Beschreibung

Die Erfindung betrifft eine Anordnung mit gemäß dem Oberbegriff des Patentanspruchs 1.

Die Erfindung betrifft eine Vorrichtung zum Heben und Stabilisieren von Lasten, insbesondere Gehänge für Fahrzeuge oder Fahrzeugteile, bestehend aus einem Rahmen sowie einer darunter angeordneten, die Last aufnehmenden Traverse, die über an der Traverse befestigte Hubseile höhenverstellbar ist und die mittels zumindest einer Teleskopstrebe stabilisiert ist.

Derartige Vorrichtungen werden vor allem in der Automobilfertigung verwendet, um Fahrzeugteile oder das zu fertigende Fahrzeug in seiner jeweiligen Fertigungsstufe zwischen den einzelnen Montageorten zu transportieren. Der Rahmen ist zu diesem Zweck gewöhnlich an einer Schiene horizontal verfahrbar, die Traverse ist über die daran angelenkten Hubseile oder anderer Hubmittel (Ketten, Bänder oder dergleichen) mittels am Rahmen angeordneter Hubzüge höhenverstellbar.

Die Aufhängung der Last sollte, insbesondere wenn es sich um ein für die Montage bereitgestelltes Fahrzeug handelt, möglichst stabil sein, denn viele Montagevorgänge laufen voll automatisiert ab, wobei es auf eine genaue Positionierung der Tragvorrichtung ankommt, was wiederum eine möglichst stabile Aufhängung der Last an der Traverse erfordert. Da bloße Seiltriebe mit vertikalen Tragseilen nicht geeignet sind, das Pendeln der Last in allen Richtungen gleichermaßen sicher zu verhindern, werden neben den Seilverspannungen Knickarme oder Scheren eingesetzt, die einerseits am Rahmen und andrerseits an der Traverse angelenkt werden und die Last stabilisieren, ohne die Hub- und Senkbewegungen zu behindern.

Die zahlreichen bekannten Lösungen sind aufwendig, schwer und teuer. So wird in der deutschen Patentanmeldung DE 36 36 459 A1 eine gattungsbildende Vorrichtung zur Führung einer Last beschrieben, die gleichsam aus einem verfahrbaren Rahmen besteht, an dem eine Traverse höhenverstellbar angelenkt ist. Die DE102018100776A1 - Straube "Hubsystem, Hängebahn mit einem Hubsystem sowie Fertigungs- und/oder Montageanlage mit einer Hängebahn" zeigt eine Vorrichtung gemäß dem Oberbegriff des Anspruchs 1 und eine Stabilisierung mit Teleskopen, die im Ruhezustand mittels Bremselementen blockierbar sind. Die DE 42 19 370 A1 - Mende et al. "Hubeinrichtung für Lasten" offenbart eine Hubeinrichtung, die mit einer Vielzahl von Hydraulikzylindern arbeitet und eine Verschwenkung der Last in mehreren Freiheitsgraden ermöglicht.

Die Druckschrift DE 10 2005 038 820 B4 - Ezichas "Fahrbare Hubvorrichtung" zeigt eine Stabilisierung mittels einer biegesteifen, schwenkbar gelagerten Strebe, deren Anlenkpunkt mittels eines Linearantriebs verschiebbar ist.

Die DE 3636459 A1 - Potocnjak "Vorrichtung zur Führung einer Last an einer Fördereinrichtung" zeigt analog zu der später noch erwähnten Lösung aus DE 10 2004 045 516 A1 eine Stabilisierung mittels Spannseilen in Teleskopstreben.

Zum Stabilisieren von fördertechnischen Baugruppen zum Heben und Senken von Lasten (sogenannte Hubzüge oder "Gehänge") werden häufig Teleskopstreben (kurz: Teleskope) eingesetzt. Dabei wird ein Innenrohr, das in einem Außenrohr verlagert ist, während der Hub- oder Senkbewegung ein- oder ausgefahren. Um Pendelbewegungen der Last in und entgegen der Verfahrrichtung des Rahmens zu vermeiden, sind dabei zwei solcher längenveränderbarer Teleskopstreben kreuzend zwischen Rahmen und Traverse vorgesehen, die in ihren Endbereichen einerseits an der Traverse und andererseits am Rahmen gelenkig befestigt sind und dazu dienen, die in Fahrtrichtung der Tragvorrichtung auftretenden Kräfte aufzunehmen.

Das Heben der Last erfolgt bei dieser Lösung über die Hubseile, die in den Eckbereichen der Traverse angelenkt sind und über Umlenkrollen in den Eckbereichen des Rahmens zu einem zentral auf dem Rahmen angeordneten Hubzug geführt sind. Zur Synchronisation der Ein- und Ausfahrbewegung der Teleskopstreben sind diese über einen Seilverbund aus Spannseilen stabilisiert und synchronisiert.

Solche Anordnungen mit seilbasierter Synchronisierung sind in DE 10 2004 045 516 A1 - Aßmann "Vorrichtung zum Heben und Stabilisieren von Lasten" offenbart, wobei eine die Bewegung der Teleskope synchronisierende Seilführung so gewählt ist, dass seitliche Pendelbewegungen gedämpft werden.

Aus dem beschriebenen Effekt der Seilverspannung ergeben sich beim geschilderten Stand der Technik Nachteile, beispielsweise weil durch die Seilführung durch die Schwenklager der Teleskopstreben eine ständige Ver- und Entdrillung der üblicherweise verwendeten Stahlseile und somit Seillängung und Verschleiß auftritt. Das Problem der Konstruktion bildet somit eine unerwünschte Längenänderung der Teleskopstreben infolge von in Traversenlängsrichtung angreifender Kräfte. Die Längung der Seile muss regelmäßig durch Nachspannen und regelmäßige Justierung ausgeglichen werden; gleiches gilt für Setzvorgänge, Schlupf und andere Abweichungen, die im Laufe der Zeit auftreten können. Zudem sind Montage, Justierung und Wartung nicht trivial und damit teuer und zeitaufwendig.

Es ist daher eine Aufgabe der vorliegenden Erfindung, eine konstruktiv einfache, funktionelle und wartungsarme Konstruktion für die Synchronisierung des Verfahrens der Teleskopstreben vorzuschlagen.

Es ist eine Kernidee der erfindungsgemäßen Lösung dieser Aufgabe, die Verspannung und Stabilisierung der Vorrichtung (Hubvorrichtung, Gehänge) mithilfe einer oder mehrerer aktiver Teleskopstreben, z.B. Teleskopspindeln, vorzunehmen.

Die Aufgabe wird insbesondere durch die Anordnung nach Patentanspruch 1 gelöst.

Dabei wird eine Vorrichtung zum Heben und Stabilisieren von Lasten vorgeschlagen, insbesondere Gehänge für Fahrzeuge oder Fahrzeugteile, bestehend aus einem Rahmen sowie einer darunter angeordneten, die Last aufnehmenden Traverse, die über an der Traverse befestigte Hubmittel höhenverstellbar ist, und die mittels zumindest einer, im Wesentlichen in einer parallel zur Verfahrrichtung des Rahmens gedachten Vertikalebene diagonal verlaufender, einerseits am Rahmen und andererseits an der Traverse verschwenkbar angelenkten Teleskopstrebe stabilisierbar ist, deren Länge zur Vermeidung eines lateralen Versatzes zwischen dem Rahmen und der Traverse während eines Hub- oder Senkvorgangs anpassbar ist. Dabei umfasst die Teleskopstrebe einen Aktuator zur aktiven Längenänderung - vorzugsweise einen Servoantrieb -, wobei eine Steuerungseinrichtung vorgesehen ist zur Anpassung der Länge der Teleskopstrebe zumindest während einer Hub- oder Senkbewegung. Weiter umfasst die Vorrichtung eine Messeinrichtung zur Messung eines lateralen Versatzes der Traverse zu dem Rahmen, wobei vorgesehen ist, dass bei Überschreiten eines vorgegebenen maximalen lateralen Versatzes die Länge der zumindest einen Teleskopstrebe zum Entgegenwirken des Versatzes verändert wird. Dadurch, dass die Teleskopstrebe synchron mit dem Hub bewegt wird, bildet sich immer ein stabilisierendes rechtwinkliges Dreieck, so dass eine Querschwingung verhindert wird und die gehobene Last auch bei mechanischen Arbeiten daran sicher fixiert ist.

Vorteilhafte Ausgestaltungen der erfindungsgemäßen Teleskopstrebe sind in den abhängigen Patentansprüchen angegeben.

Die dabei beschriebenen Merkmale und deren Vorteile können sowohl einzeln als auch in sinnvoller Kombination miteinander realisiert werden.

Eine höhere Stabilität ergibt sich, wenn zur Stabilisierung zwei sich kreuzende und in der parallel zur Verfahrrichtung des Rahmens gedachten Vertikalebene diagonal angeordnete Teleskopstreben vorgesehen sind. Dabei wird vorteilhaft vorgesehen, dass die beiden Teleskopstreben derart angesteuert werden, dass ihre jeweiligen Längenänderungen im Wesentlichen synchron zueinander erfolgen.

In einer einfach zu realisierenden Ausführungsform umfasst die zumindest eine Teleskopstrebe als Aktuator zur aktiven Längenänderung eine mittels eines Motors angetriebene mechanische Stellvorrichtung, beispielsweise eine Spindel oder einen Schneckentrieb. Solche Antriebe, die auch Servoantrieb genannt werden, sind i.d.R. selbsthemmend, so dass auf eine ansonsten erforderliche Bremse für den stationären Zustand verzichtet werden kann. Alternativ können auch hydraulische Stellvorrichtungen, insbesondere Hydraulikzylinder, zur Realisierung der Teleskopstrebe(n) vorgesehen werden. Im Falle nur einer Teleskopstrebe muss dazu ein doppelt wirkender Hydraulikzylinder eingesetzt werden.

Vorteilhaft ist der Antrieb (Aktuator zur aktiven Längenänderung) als elektrischer Schrittmotor oder als elektrischer Linearantrieb ausgeführt bzw. umfasst einen solchen. Dabei kann oft auf eine Längenmesseinrichtung (z.B. Dreh-Encoder oder Linear-Encoder) in der Teleskopstrebe verzichtet werden. Der Schrittmotor bzw. Linearantrieb verfährt die Teleskopstrebe mit jedem Schritt um eine definierte Strecke (Länge), so dass analog zu einer Hubbewegung eine entsprechende Folge von Schritten angesteuert werden kann, um die Geometrie des sich ergebenden aussteifenden Dreiecks rechtwinklig zu erhalten bzw. eine Lateralbewegung der Traverse gegenüber dem Rahmen zu vermeiden. Insbesondere beim Einsatz von zwei sich kreuzenden Teleskopstreben ist eine Ausführung mit Schrittmotoren sinnvoll, weil bei einer synchronen Ansteuerung der Schrittmotoren die synchrone Bewegung der Teleskopstreben automatisch gegeben ist.

Erfindungsgemäß umfasst die Vorrichtung eine Messeinrichtung zur Messung eines lateralen Versatzes der Traverse zu dem Rahmen, wobei vorgesehen ist, dass bei Überschreiten eines vorgegebenen maximalen lateralen Versatzes die Länge der zumindest einen Teleskopstrebe zum Entgegenwirken des Versatzes verändert wird. Alternativ oder zusätzlich kann eine weitere Messeinrichtung zur kontinuierlichen Messung des Abstandes zwischen dem Rahmen und der Traverse oder zur Erfassung der Strecke und/oder der Geschwindigkeit einer Hub- bzw. Senkbewegung vorgesehen sein, womit dann eine Steuerung den dazu notwendigen Verfahrweges der zumindest einen Teleskopstrebe errechnen und die zumindest eine Teleskopstrebe passend ansteuern kann. Eine jeweils zur Vermeidung des lateralen Versatzes erforderliche Länge der zumindest einen Teleskopstrebe kann also anhand einer jeweiligen Hubhöhe eingestellt werden.

Vorteilhaft ist eine Steuerungseinrichtung zur Ansteuerung der Längenänderung der zumindest einen Teleskopstrebe vorgesehen. Im Falle des Einsatzes nur einer Teleskopstrebe wird dann einfach abhängig von der Richtung des Versatzes die Teleskopstrebe entsprechend ein- oder ausgefahren. Dazu kann insbesondere bei hohen Verfahrgeschwindigkeiten oder Präzisionserfordernissen ein Regelalgorithmus angewendet werden, z.B. ein PID-Regler. Im Falle von zwei sich kreuzenden Teleskopstreben kann für jede der Teleskopstreben eine Druck- und Zugbelastung erfasst werden. Im einfachsten Fall in Form einer Druckfeder bei einem der Anlenkpunkte, vorzugsweise an der unteren Traverse, wobei 2 Mikroschalter die Auslenkung der Feder überwachen und zur Unterscheidung der Zustände Druck - Neutral - Zug ausreichen. Falls bei einem Verfahren der Vorrichtung, also beim Heben oder Senken, beide Teleskopstreben auf Druck beansprucht werden, werden beide Teleskopstreben schrittweise oder kontinuierlich synchron eingefahren, bis zumindest eine Teleskopstrebe in den neutralen oder den Zug-Zustand übergeht. Die beidseitige Druckbeanspruchung geschieht naturgemäß zumeist beim Heben des Gehänges o.ä.. Das gesteuerte Nachführen ermöglicht es, dass die Teleskopstreben sich dem Hubvorgang automatisch anpassen, ohne dabei ihre Stabilisierungswirkung einzubüßen. Umgekehrt - und dieser Zustand wird zumeist bei einer Senkbewegung auftreten - werden im Falle einer gleichzeitigen Zugbeanspruchung beide Teleskopstreben synchron ausgefahren, bis zumindest eine der Teleskopstreben nicht mehr auf Zug belastet wird.

Selbstverständlich ist die Ausführung mit je 2 Mikroschaltern pro Messeinrichtung nur für eine binäre Regelung einsetzbar und daher mit entsprechenden Nachteilen (ruckweise Arbeitsweise, keine Anpassung der Geschwindigkeit etc.) verbunden. Analoge Druckaufnehmer - z.B. auf Halbleiterbasis, mit Dehnmessstreifen oder mittels FBG (Fiber Bragg Grating) - erlauben den Einsatz hochdynamischer Regelalgorithmen für das Verfahren der Teleskopstreben.

Ein Ausführungsbeispiel einer erfindungsgemäßen Teleskopstrebe wird nachfolgend anhand der Zeichnung erläutert.

Dabei zeigen:
- Figur 1: eine Seitenansicht (Schnittzeichnung) der abgesenkten Vorrichtung, und
- Figur 2: die Vorrichtung im eingefahrenen (gehobenen) Zustand.

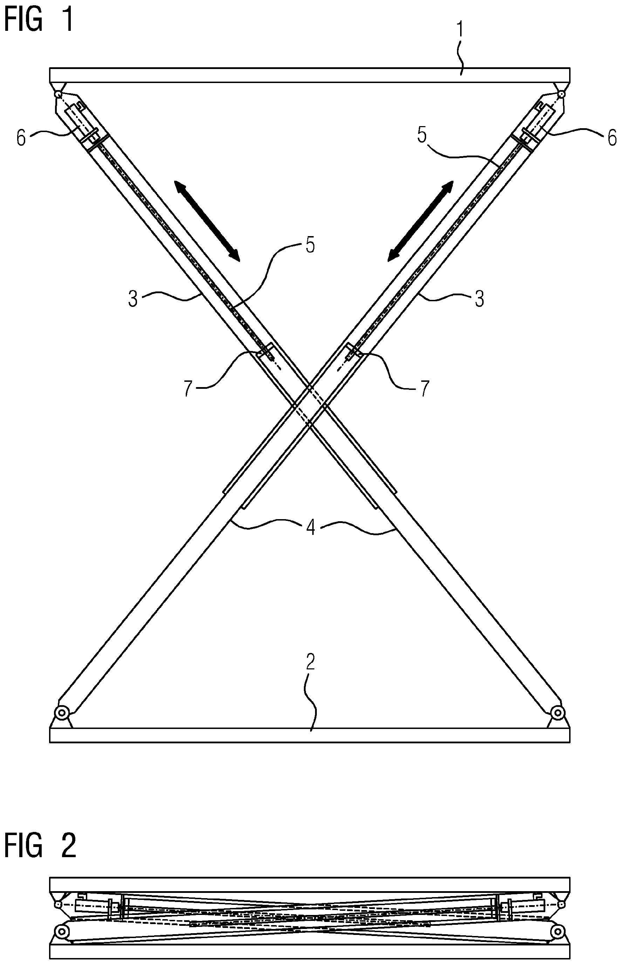

Die Figur 1 zeigt eine Anordnung (Hubzug ), bei der als Hubmittel zwischen Oberrahmen 1 und Traverse 2 ("Unterrahmen") Seile oder Bänder (in der Figur 1 nicht gezeigt) zum Einsatz kommen. Insbesondere im abgesenkten Zustand müssen Querbewegungen (Schwingen) der unteren Traverse 2 verhindert werden. Figur 1 zeigt dazu eine Verspannung und Stabilisierung von kreuzförmig zwischen Oberrahmen 1 und Traverse 2 angeordneten Teleskopstreben; in einer einfachen Ausführungsform genügt jedoch eine der beiden dargestellten und in einem abgesenkten Zustand der Vorrichtung im Wesentlichen diagonal verlaufende aktive Teleskopstrebe (z.B. Teleskopspindel, doppeltwirkender Hydraulikzylinder o.ä.).

Das Prinzip der Erfindung beruht auf einer Verspannung und Stabilisierung der Teleskopstreben mit Hilfe von 2 Gewindespindeln 5.

In der Figur 1 ist eine Ausführungsform mit 2 Teleskopstreben in sich kreuzender Anordnung dargestellt; prinzipiell funktioniert die Anordnung jedoch auch mit nur einer Teleskopstrebe. Die Figur 1 zeigt dabei zwei Gewindespindeln 5, die von jeweils einem Aktuator (z.B. Getriebemotor oder Schrittmotor) zur aktiven Längenänderung 6 - im Folgenden als Servoantrieb bezeichnet - angetrieben werden. Die Servoantriebe 6 werden mit dem Hubantrieb synchronisiert. Die Position der Gewindespindeln 5 folgt immer dem entsprechenden Hub. Die Gewindespindeln 5 verbinden das Außenrohr 3 mit dem Innenrohr 4 jeweils formschlüssig. Die Spindelmutter 7 ist am Ende des Innenrohres 4 befestigt. Ein Synchronmotor 6 ist jeweils am oberen Ende des Außenrohrs 3 befestigt und mit der Gewindespindel 5 verbunden. Durch eine Drehbewegung der Gewindespindel 5 verfährt das Innenrohr 4 zum Außenrohr 3.

Die Figur 2 zeigt dieselbe Anordnung in einem "eingefahrenen" Zustand, d.h., dass die Traverse auf maximale Höhe verfahren ist und die Teleskopstreben sind maximal eingefahren. Bei beiden Figuren sind die Hubseile aus Gründen der Übersichtlichkeit nicht dargestellt.

Dadurch, dass die Teleskopstreben (kurz: Teleskope) synchron mit dem Hub bewegt werden, bildet sich immer ein stabilisierendes Dreieck zwischen Traverse 2, Teleskopstrebe 3, 4 und (nicht dargestelltem) Hubseil bzw. Rahmen 1, Teleskopstrebe 3, 4 und (nicht dargestelltem) Hubseil.

Die Stabilisierung mit nur einem Teleskop 3, 4 und Servoantrieb 6 ist auch möglich.

In einer vorteilhaften Ausgestaltung erfolgt die Führung des Innenrohrs im Außenrohr der Teleskopstrebe mit einfach zu fertigenden Gleitschuhen anstelle der sonst oft üblichen Rollen- oder Kugellager. Diese Gleitschuhe werden zur einfachen Montage von außen in entsprechende Öffnungen im Außenrohr gesteckt und führen das Innenrohr. Sie sind vorzugsweise aus einem Werkstoff mit guten Gleiteigenschaften, z. B. Kunststoff, hergestellt. Diese Ausführung ist wartungsarm. Durch die Montage von außen ist ein Nachstellen (beispielsweise durch Austausch von Distanzstücken zwischen dem Außenrohr und einer Anlagefläche der Gleitschuhe / Gleitstücke) bzw. ein Austausch der Gleitschuhe einfach möglich. Zudem ergibt sich ein spielfreier und leiser Lauf.

Durch die vorstehend beschriebene Konstruktion und ihren geschilderten Varianten werden mit Hilfe einer geeigneten Ansteuerung beide Innenrohre 3 sowohl beim Ein- als auch beim Ausfahren der Teleskopstreben synchron verfahren. Dies verhindert eine ungewünschte Längenänderung der Teleskopstreben infolge von in Traversenlängsrichtung angreifenden Kräften; die Konstruktion stabilisiert sich selbst und ein hin- und herschwingen, insbesondere im abgesenkten Zustand, der unteren Traverse wird gemindert bzw. verhindert.

## Patentansprüche

1. Vorrichtung zum Heben und Stabilisieren von Lasten, insbesondere Gehänge für Fahrzeuge oder Fahrzeugteile, bestehend aus einem Rahmen (1) sowie einer darunter angeordneten, die Last aufnehmenden Traverse (2), die über an der Traverse (2) befestigte Hubmittel höhenverstellbar ist, und die mittels zumindest einer, im Wesentlichen in einer parallel zur Verfahrrichtung des Rahmens gedachten Vertikalebene diagonal verlaufender, einerseits am Rahmen und andererseits an der Traverse (2) verschwenkbar angelenkte Teleskopstrebe (3, 4) stabilisierbar ist, deren Länge zur Vermeidung eines lateralen Versatzes zwischen dem Rahmen (1) und der Traverse (2) während eines Hub- oder Senkvorgangs anpassbar ist, wobei die Teleskopstrebe (3, 4) einen Aktuator (6) zur aktiven Längenänderung umfasst, und
wobei eine Steuerungseinrichtung vorgesehen ist zur Anpassung der Länge der Teleskopstrebe (3, 4) zumindest während einer Hub- oder Senkbewegung,
**dadurch gekennzeichnet,**
**dass** die Vorrichtung eine Messeinrichtung zur Messung eines lateralen Versatzes der Traverse (2) zu dem Rahmen (1) umfasst, wobei vorgesehen ist, dass bei Überschreiten eines vorgegebenen maximalen lateralen Versatzes die Länge der zumindest einen Teleskopstrebe (3, 4) zum Entgegenwirken des Versatzes verändert wird.

2. Vorrichtung nach Patentanspruch 1,
**dadurch gekennzeichnet,**
**dass** zur Stabilisierung zwei sich kreuzende und in der parallel zur Verfahrrichtung des Rahmens (1) gedachten Vertikalebene diagonal angeordnete Teleskopstreben (3, 4) vorgesehen sind.

3. Vorrichtung nach Patentanspruch 2,
**dadurch gekennzeichnet,**
**dass** vorgesehen ist, dass die beiden Teleskopstreben (3, 4) derart angesteuert werden, dass ihre jeweiligen Längenänderungen im Wesentlichen synchron zueinander erfolgen.

4. Vorrichtung nach einem der vorhergehenden Patentansprüche,
**dadurch gekennzeichnet,**
**dass** die zumindest eine Teleskopstrebe (3, 4) eine mittels eines Motors (6) angetriebene mechanische Stellvorrichtung (5, 7) umfasst.

5. Vorrichtung nach Patentanspruch 4,
**dadurch gekennzeichnet,**
**dass** die mechanische Stellvorrichtung (5, 7) eine Spindel (5) oder einen Schneckentrieb umfasst.

6. Vorrichtung nach einem der Patentansprüche 4 oder 5,
**dadurch gekennzeichnet,**
**dass** der Motor (6) ein Schrittmotor ist.

7. Vorrichtung nach einem der vorhergehenden Patentansprüche,
**dadurch gekennzeichnet,**
**dass** vorgesehen ist, eine jeweils zur Vermeidung des lateralen Versatzes erforderliche Länge der zumindest einen Teleskopstrebe (3, 4) anhand einer jeweiligen Hubhöhe einzustellen.

8. Vorrichtung nach Patentanspruch 7,
**dadurch gekennzeichnet,**
**dass** die Vorrichtung eine Einrichtung zur Erfassung einer jeweiligen Hubhöhe der Vorrichtung umfasst.

9. Vorrichtung nach einem der vorhergehenden Patentansprüche,
**dadurch gekennzeichnet,**
**dass** die zumindest eine Teleskopstrebe (3, 4) eine Einrichtung zur Erfassung ihrer jeweiligen Länge umfasst.

## Claims

1. Device for lifting and stabilizing loads, in particular hangers for vehicles or vehicle parts, consisting of a frame (1) and, disposed therebelow, a crossbeam (2) which receives the load, is height-adjustable by lifting means fastened to the crossbeam (2) and is able to be stabilized by means of at least one telescopic strut (3, 4) which runs diagonally substantially in an imaginary vertical plane parallel to the direction of displacement of the frame and is pivotably articulated on the frame on one side and on the crossbeam (2) on the other side, the length of said telescopic strut being adaptable for avoiding a lateral offset between the frame (1) and the crossbeam (2) during a lifting or lowering procedure,
wherein the telescopic strut (3, 4) has an actuator (6) for actively changing the length, and
wherein provided is a control installation for adapting the length of the telescopic strut (3, 4) at least during a lifting or lowering movement,
**characterized**
**in that** the device comprises a measuring installation for measuring a lateral offset of the crossbeam (2) relative to the frame (1), wherein it is provided that the length of the at least one telescopic strut (3, 4), when exceeding a predefined maximum lateral offset, is changed so as to counteract the offset.

2. Device according to Patent Claim 1,
**characterized**
**in that** two telescopic struts (3, 4) which cross one another and are disposed diagonally in the imaginary vertical plane parallel to the direction of displacement of the frame (1) are provided for stabilization.

3. Device according to Patent Claim 2,
**characterized**
**in that** it is provided that the two telescopic struts (3, 4) are actuated in such a manner that their respective changes in length take place substantially synchronously with one another.

4. Device according to one of the preceding patent claims, **characterized**
**in that** the at least one telescopic strut (3, 4) comprises a mechanical actuation device (5, 7) which is driven by means of a motor (6).

5. Device according to Patent Claim 4,
**characterized**
**in that** the mechanical actuation device (5, 7) comprises a spindle (5) or a worm drive.

6. Device according to one of Patent Claims 4 or 5, **characterized**
**in that** the motor (6) is a stepper motor.

7. Device according to one of the preceding patent claims, **characterized**
**in that** it is provided to adjust a length of the at least one telescopic strut (3, 4), which is respectively required for avoiding the lateral offset, by way of a respective lifting height.

8. Device according to Patent Claim 7,
**characterized**
**in that** the device comprises an installation for detecting a respective lifting height of the device.

9. Device according to one of the preceding patent claims, **characterized**
**in that** the at least one telescopic strut (3, 4) comprises an installation for detecting the respective length of said telescopic strut.

## Revendications

1. Installation de levage et de stabilisation de charges, en particulier de suspensions de véhicules ou de parties de véhicule, consistant en un cadre (1) ainsi qu'en une traverse (2) disposée en-dessous, recevant la charge qui est réglable en hauteur par des moyens de levage fixés à la traverse (2) et qui peut être stabilisée au moyen d'au moins un montant (3, 4) télescopique s'étendant en diagonale sensiblement dans un plan vertical imaginaire parallèlement à la direction de déplacement du cadre, articulé à pivotement d'une part au cadre et d'autre part à la traverse (2), montant dont la longueur peut être adaptée pour empêcher un décalage latéral entre le cadre (1) et la traverse (2) pendant une opération de levage ou d'abaissement, dans laquelle le montant (3, 4) télescopique comprend un actionneur (6) pour la modification active de la longueur, et
dans laquelle il est prévu un dispositif de commande pour l'adaptation de la longueur du montant (3, 4) télescopique au moins pendant un mouvement de levage ou d'abaissement,
**caractérisée en ce que**
l'installation comprend un dispositif de mesure pour la mesure d'un décalage latéral de la traverse (2) par rapport au cadre (1), dans laquelle il est prévu que, si un décalage latéral donné à l'avance est dépassé, on modifie la longueur du au moins un montant (3, 4) télescopique pour contrecarrer le décalage.

2. Installation suivant la revendication 1,
**caractérisée en ce que**
pour la stabilisation il est prévu deux montants (3, 4) téléscopiques disposés en diagonale dans le plan vertical imaginaire parallèlement à la direction de déplacement du cadre (1).

3. Installation suivant la revendication 2,
**caractérisée en ce qu'**
il est prévu que les deux montants (3, 4) téléscopiques soient commandés de manière à ce que leurs modifications de longueur respectives s'effectuent de façon sensiblement synchrone l'une par rapport à l'autre.

4. Installation suivant l'une des revendications précédentes, **caractérisée en ce que**
le au moins un montant (3, 4) télescopique comprend un dispositif (5, 7) de réglage mécanique entraîné au moyen d'un moteur (6).

5. Installation suivant la revendication 4,
**caractérisée en ce que**
le dispositif (5, 7) de réglage mécanique comprend une broche (5) ou un engrenage à vis sans fin.

6. Installation suivant l'une des revendications 4 ou 5, **caractérisée en ce que**
le moteur (6) est un moteur pas à pas.

7. Installation suivant l'une des revendications précédentes, **caractérisée en ce qu'**
il est prévu de régler, à l'aide d'une hauteur de levage respective, une longueur, nécessaire respectivement pour empêcher le décalage latéral, du au moins un montant (3, 4) télescopique.

8. Installation suivant la revendication 7,
**caractérisée en ce que**
l'installation comprend un dispositif de détection d'une hauteur de levage respectif de l'installation.

9. Installation suivant l'une des revendications précédentes, **caractérisée en ce que**
le au moins un montant (3, 4) télescopique comprend un dispositif de détection de sa longueur respective.
